# EUROPEAN PATENT SPECIFICATION

(11) **EP 4 520 697 B1**
(45) Date of publication and mention of the grant of the patent: **05.08.2026**
(21) Application number: 24197536.6
(22) Date of filing: 30.08.2024
(51) Int. Cl.: B65H 49/08, B65H 51/10, B65H 51/14, B65H 57/18, B21F 1/02, B23K 9/133

(54) **STORAGE AND FEEDING ASSEMBLY FOR A WELDING WIRE FOR A WELDING OR BRAZING PLANT**
VORRATS- UND ZUFÜHRANORDNUNG FÜR EINEN SCHWEISSDRAHT FÜR EINE SCHWEISS- ODER LÖTANLAGE
ENSEMBLE DE STOCKAGE ET D'ALIMENTATION POUR UN FIL DE SOUDAGE POUR UNE INSTALLATION DE SOUDAGE OU DE BRASAGE

(30) Priority: 08.09.2023 IT 202300018489
(43) Date of publication of application: 12.03.2025
(73) Proprietor: Safra S.p.A., 25039 Travagliato, Brescia (IT)
(72) Inventor: LOMBARDI, Andrea, I-25039 Travagliato, Brescia (IT); SPIESS, Michael, I-25039 Travagliato, Brescia (IT)
(74) Representative: Zanardelli, Davide

(56) References cited:
- WO-A1-2018/167806
- WO-A1-88/10230
- JP-A- 2003 025 068
- JP-U- S 598 965
- JP-U- S5 933 862
- JP-U- S57 193 682
- KR-U- 20140 005 881
- KR-Y1- 200 400 806

## Description

The present invention relates to the field of wire welding or brazing plants and relates in particular to a storage and feeding assembly for a welding wire for welding or brazing plants.

The present invention may however be used for any type of wire that has to be stored in a drum and supplied to a plant positioned downstream of the assembly.

As is known, some welding or brazing plants use a welding wire stored in a drum. The wire is progressively extracted from the drum and supplied to the welding apparatus, for example a welding torch moved either by a robot or manually.

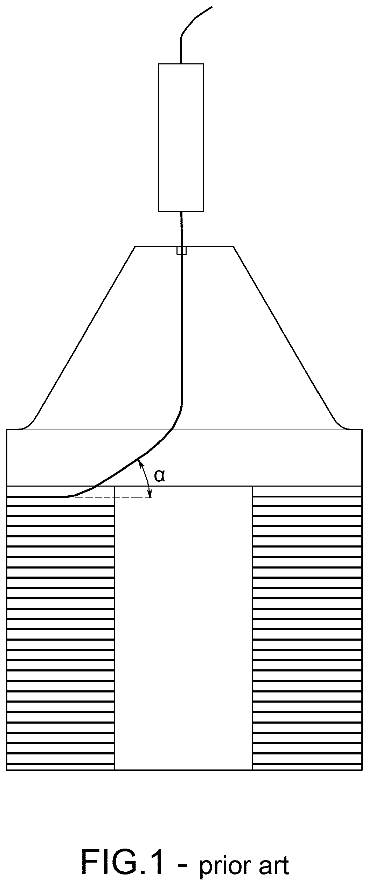

An example of a storage and feeding assembly typical of the prior art is shown in Fig. 1, wherein a welding wire wound in coils is stored in a cylindrical drum closed by a conical lid. This conical lid, which has a wire outlet passage at the top thereof, also has the function of guiding the wire towards the outlet passage in such a way as to limit the formation of kinks. The wire is pulled out of the drum and fed to the welding apparatus by a wire pulling device. In some embodiments, for example of the type described in WO2018167806A1, in the name of the same Applicant, the wire pulling device is also associated with a wire straightening device that is suitable for eliminating, or at least reducing, the tendency of the wire to twist due to the prolonged storage thereof in the form of coils in the drum.

In the known solutions, typically, the bundle of wire does not occupy all the available volume of the drum, due both to the requirement to position, at the top of the bundle of wire, unwinding accessories to facilitate unwinding the wire towards the exit passage, and also to avoid forcing the wire to complete an overly pronounced curve upwards (exit angle α in Fig. 1), that may facilitate the formation of kinks in unwinding the wire. Further embodiments of a storage and feeding assembly according to the state of the art are disclosed in JPS598965U.

The object of the present invention is that of proposing a storage and feeding assembly of a wire, wound in a coil, in a drum that makes it possible to store a greater quantity of wire in the drum, thus reducing the drum replacement frequency and increasing productivity.

Said object is achieved with a storage and feeding claim 1. assembly according to the independent The dependent claims describe preferred embodiments of the invention.

The features and advantages of the storage and feeding assembly according to the invention shall be made apparent from the following description of preferred exemplary embodiments thereof, provided by way of nonlimiting examples, with reference to the accompanying figures, wherein:
- Fig. 1 shows a storage and feeding assembly according to a typical embodiment of the prior art;

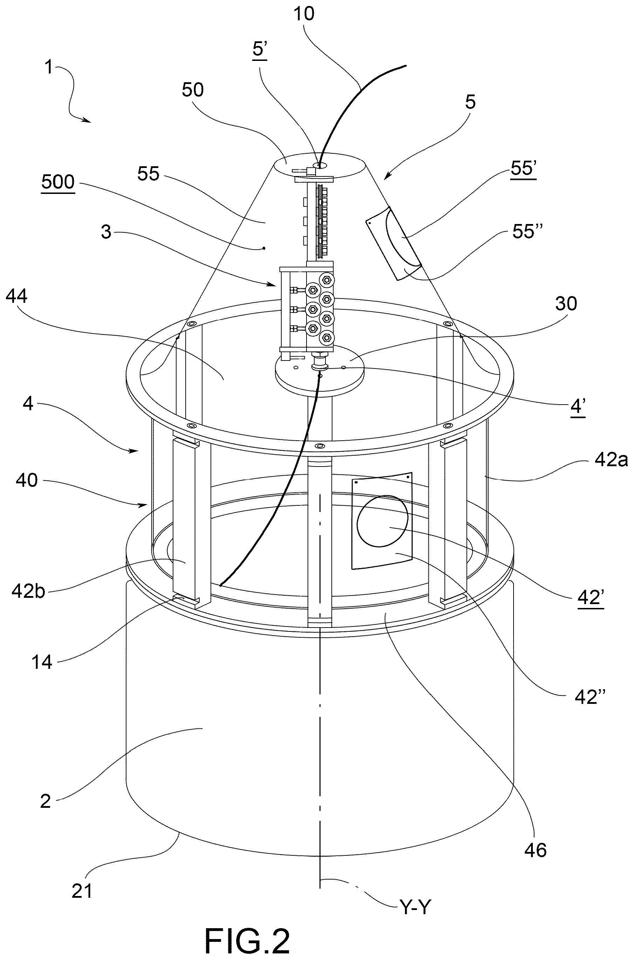

- Fig. 2 is a perspective view of a storage and feeding assembly according to the invention in one embodiment;
- Fig. 3 is a view from above of the assembly in Fig. 2;

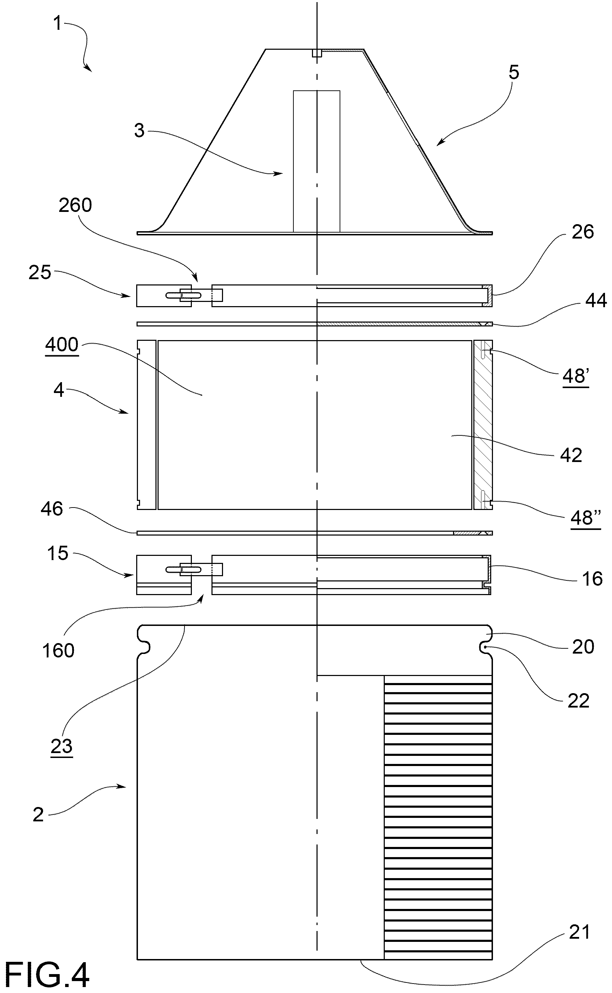

- Fig. 4 is a view from above of separate parts and a partial section of the storage and feeding assembly shown in Fig. 2;

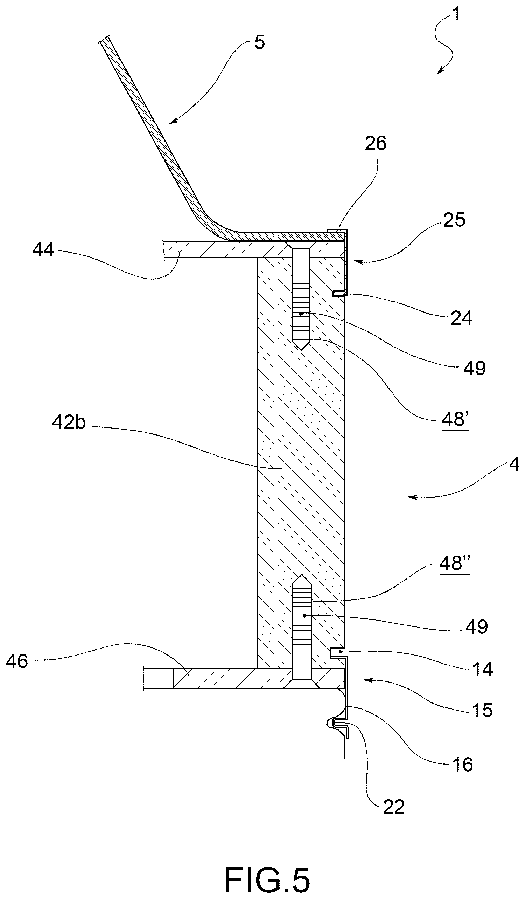

- Fig. 5 is an enlargement of a portion in section of the assembly in Fig. 4;
- Fig. 6a, 6b, 6c, 6d and 6e show the storage and feeding assembly comprising a wire unwinding accessory in five different embodiments;
- Fig. 7 is a perspective view of a handling device according to one embodiment;
- Fig. 8a and 8b are a front view and a side view of the handling device of Fig. 6 respectively.

In said drawings, the numeral 1 has been used to denote, as a whole, a storage and feeding assembly for a welding wire to be supplied to an apparatus, such as a welding torch, according to the invention. The storage and feeding assembly 1 extends along an assembly axis X-X.

According to the invention, the storage and feeding assembly 1 comprises a drum 2, for example cylindrical in shape or with a polygonal cross section, that is suitable for storing a welding wire 10 wound in coils 10', forming a bundle 12 of wire. In particular, the coils 10' of the wire 10 are maintained in an ordered overlapping relationship that allows the correct extraction of the welding wire 10 from the drum 2.

The drum extends about a drum axis Y-Y between a resting base 21 and an open upper end 23.

Preferably, the assembly axis X-X and the drum axis Y-Y are aligned.

The ratio between a longitudinal dimension of the drum 2 and a longitudinal dimension of the bundle 12 is between 70% and 100%, preferably 85%.

The term "longitudinal dimension" refers to the dimension along the drum axis Y-Y.

Furthermore, the storage and feeding assembly 1 comprises a wire handling device 3 positioned between the drum 2 and the apparatus and suitable for extracting the wire from the drum 2 in order to feed it to the welding or brazing apparatus (not shown).

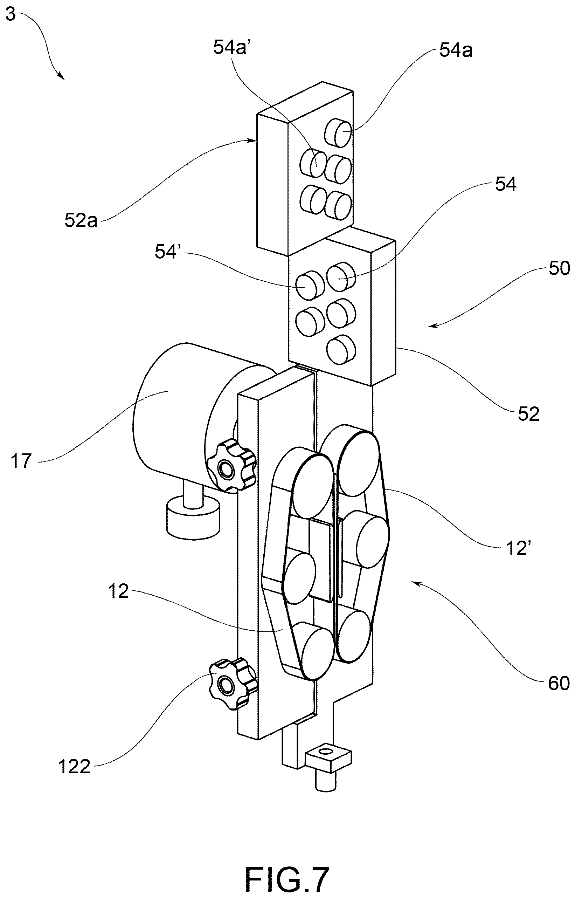

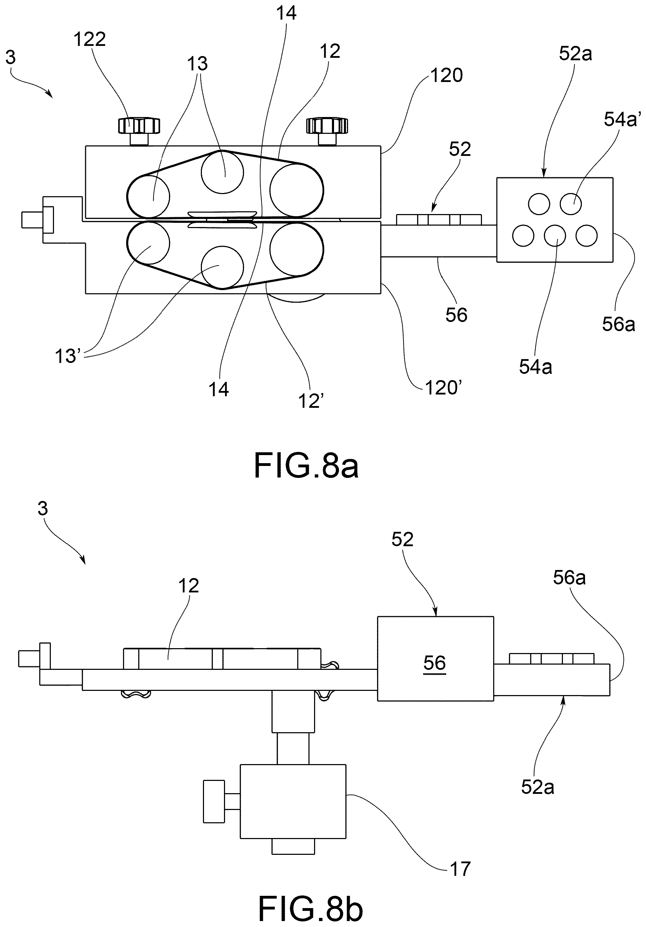

According to one embodiment (shown in Fig. 7, 8a and 8b), the wire handling device 3 comprises a wire rectifier group 50 and/or a wire pulling group 60.

The wire pulling group 60 comprises two opposing driving belts 12, 12'. The two driving belts form two respective straight belt segments 14 facing each other so as to receive therebetween and move the wire 10 exiting from the drum 2.

In other words, each driving belt 12; 12' is returned by respective tensile rollers 13; 13' in such a way as to form a closed ring. One of such tensile rollers 13, 13' is a drive roller suitable for generating the rotation of the respective driving belt 12; 12'.

In one embodiment, the drive roller is keyed to a shaft of an actuator 17, for example a pneumatic or electric actuator.

In one embodiment, each driving belt 12; 12' is returned on three tensile rollers 13; 13'.

In one embodiment, the extension of the straight segment 14 is at least equal to the diameter of the tensile rollers 13; 13', i.e., it is on the order of tens or, preferably, hundreds of mm.

In fact, with respect to the driving rollers of the prior art, which, having punctual contact with the welding wire, exert a high specific pressure on said wire, the driving belts 12; 12', having a much larger contact surface with the wire than the rollers, exert a much lower specific pressure.

The welding wire 10 is therefore not deformed by the passage between the driving belts 12; 12', and also any deposit of dust or other external agents on the belts has no effect on the surface of the wire.

Furthermore, this handling of the wire without deformation or alteration effects on the wire is facilitated by the fact that the driving belts 12; 12' may be made of a softer material than the one with which the driving rollers are usually made.

In one embodiment, the tensile rollers 13; 13' of the two opposite driving belts 12; 12' are supported by respective driving plates 120; 120' that may be mutually spaced apart, for example by means of micrometric screws 122, as a function of the diameter of the welding wire 1.

According to a further embodiment (not shown), the wire pulling group 60 comprises a plurality of motorized wire pulling rollers facing each other so as to receive therebetween and move the wire 10 exiting from the drum 2. Preferably, there are two or four wire pulling rollers.

The rectifier group 50, which as mentioned above may be positioned downstream or upstream of the wire pulling group 60, comprises at least two roller rectifier units 52, 52a arranged in series with each other along the advancement direction of the wire.

Each rectifier unit 52; 52a comprises at least two opposing straightening rollers 54, 54'; 54a, 54a' between which the welding wire 10 is made to pass, being moved by the wire pulling group 60.

The suitably shaped straightening rollers 54, 54' of one rectifier unit 52 are oriented perpendicular to the straightening rollers 54a, 54a' of at least one other rectifier unit 52a. However, all of the straightening rollers 54, 54'; 54a, 54a' have the respective rotation axes thereof perpendicular to the advancement direction of the welding wire 10, i.e., perpendicular to the straight segments 14 of the driving belts 12, 12'.

With such an arrangement of the straightening rollers, it has been experimentally verified that the memory of the welding wire 10 emerging from the drum 2 is completely eliminated. The welding wire 10 that emerges from the rectifier group 50 is therefore completely neutral.

In one embodiment the straightening rollers 54, 54'; 54a, 54a' are mounted idly on a respective roller support plate 56, 56a. Therefore, the straightening rollers effectively perform only the function of straightening the welding wire 10. By not exerting any torque on the wire, the wire is straightened, but the cross section thereof is not deformed nor is the surface thereof altered.

According to one embodiment, each rectifier unit 52, 52a is provided with at least five straightening rollers 54, 54'; 54a, 54a': at least two first rollers 54; 54a arranged side by side along the advancement direction of the wire, opposite and offset with respect to at least three second rollers 54'; 54a' arranged side by side along the advancement direction of the wire.

In one embodiment, the straightening rollers of each rectifier unit are seven in number: three first rollers 54; 54a arranged side by side along the advancement direction of the wire, opposite and offset with respect to four second rollers 54'; 54a' arranged side by side along the advancement direction of the wire.

In one embodiment, also the distance between the first and second straightening rollers 54, 54'; 54a, 54a' may be adjusted as a function of the diameter of the necessary deformation of the welding wire 10.

The storage and feeding assembly 1 comprises a substantially conical lid 5, wherein an outlet passage 5' of the wire 10 is obtained at the top thereof.

According to one embodiment, the lid side wall 55 is at least partially made of a transparent material in such a way as to allow for visual inspection of the handling device 3 through the lid side wall.

According to one embodiment, the lid side wall 55 is made entirely of a transparent material. Preferably, the entire lid 5 is made of a transparent material.

According to one embodiment, the lid 5 is made of a plastics material.

According to the invention, the storage and feeding assembly 1 comprises a spacer 4 suitable for being releasably positioned between the upper end 23 of the drum 2 and the lid 5.

The spacer comprises a spacer body 40 that defines a spacer housing 400 delimited by an annular side wall 42 in such a way as to act as an extension for the drum 2.

According to one embodiment, the annular side wall 42 is made at least partially of a transparent material in such a way as to allow for a visual inspection of the spacer housing 400 through the annular side wall 42.

According to one embodiment, the annular side wall 42 is made entirely of a transparent material. Preferably, the entire spacer body 40 is made of a transparent material.

According to one preferred embodiment, the spacer body 40 is made of a plastics material.

According to one embodiment, the spacer 4 is placed at the end of the drum 2. Preferably, a spacer outlet opening 4' is obtained in the spacer 4 through which the wire 10 originating from the drum 2 emerges.

According to the invention, the spacer body 40 further comprises an upper base 44 connected to the annular side wall 42. In other words, the annular side wall 42 and the upper base 44 define the spacer housing 400. Preferably, the spacer outlet opening 4' is obtained in the upper base 44.

According to the invention, the wire handling device 3 is integrally fastened to the upper base 44, in particular externally with respect to the spacer housing 400.

According to one embodiment, the wire handling device 3 is screwable to the spacer 4, preferably to the upper base 44.

According to a further embodiment, the wire handling device 3 comprises a support base 30 that is suitable for supportingly engaging and being fastened to the spacer 4, preferably to the upper base 44.

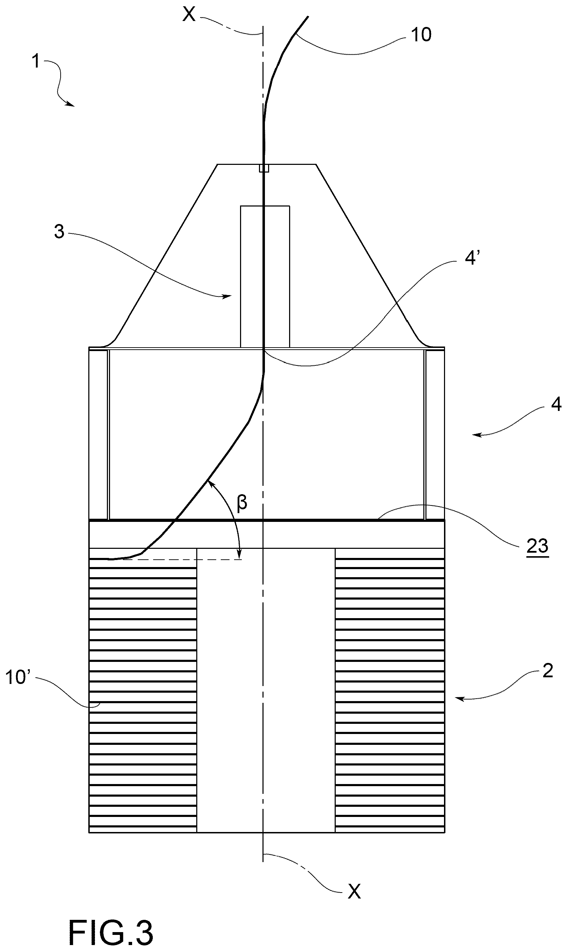

Fig. 3 schematically shows the storage and feeding assembly 1 wherein the welding wire 10 of the upper coil, emerging from the drum outlet opening 2', passes through the spacer housing 400 and exits from the spacer outlet opening 4', preferably obtained in the upper base 44, and is engaged by the wire handling device 3.

According to one embodiment, the annular side wall 42 comprises plate-shaped elements 42a and vertical supports 42b interposed therebetween.

According to one embodiment, in the annular side wall 42, preferably in the plate-shaped elements 42a, spacer openings 42' are obtained for accessing the spacer housing 400 when the spacer 4 engages the drum 2. Preferably, such openings 42' may be opened and closed by means of a door 42".

According to one embodiment, the door 42" is made of a transparent material.

According to one embodiment, the annular side wall 42 has an adjustable axial extension. "Axial extension" means along the assembly axis X-X. Preferably, the annular side wall 42 is adjustable; for example it is a telescopic wall.

According to one embodiment, the spacer body 40 comprises a lower flange 46 for the engagement with the drum 2. In particular, the lower flange 46 rests against an upper edge 20 of the drum 2.

According to one embodiment, the annular side wall 42, preferably the vertical supports 42b, comprises upper longitudinal holes 48' and lower longitudinal holes 48" for the engagement, by means of screws 49, with the upper base 44 and the lower flange 46 respectively. In other words, there is a mutual mechanical engagement between the annular side wall 42 and the upper base 44, and between the annular side wall 42 and the lower flange 46.

According to one embodiment, the storage and feeding assembly 1 comprises first coupling means 15 for releasably coupling the spacer 4 to the drum 2. Preferably, the first coupling means 15 comprise a first releasable clamping ring 16 that couples adjacent end portions of the drum 2 and of the annular side wall 42. Preferably, the first clamping ring 16 has a C-shaped cross section.

According to one embodiment, the first clamping ring 16 comprises first handling means 160 suitable for configuring the first clamping ring 16 from an open configuration to a closed configuration wherein it engages the adjacent end portions of the drum 2 and of the annular side wall 42 in order to fasten them in a stable manner to each other.

According to one embodiment, a lower end portion of the annular side wall 42 comprises a lower circumferential groove 14 for engagement with the first clamping ring 16. Preferably, the lower circumferential groove 14 is obtained only at the vertical supports 42b.

According to one embodiment, the upper end 23 of the drum 2 comprises a circumferential drum groove 22 for engagement with the first clamping ring 16.

According to one embodiment, the first clamping ring 16 is partially inserted into the lower circumferential groove 14 of the annular side wall 42, and into the circumferential drum groove 22 of the drum 2.

According to the invention, the lid 5, positioned on the spacer 4, preferably on the upper base 44, defines a lid volume 500.

According to one embodiment, the lid 5 comprises an upper lid wall 50 wherein there are obtained the outlet passage 5', and a lid side wall 55.

According to the invention, , the handling device 3 extends into the lid volume 500 substantially coaxially to the drum axis Y-Y.

In a further embodiment (not shown), not according to the present invention, the wire handling device 3 is positioned downstream of the lid 5 along the wire feed direction to the apparatus. In other words, the wire handling device 3 is positioned externally to the lid 5, it is, for example, integrally fastened to the upper lid wall 50, externally in relation to the lid volume 500.

According to one embodiment, lid openings 55' are obtained in the lid side wall 55 in order to access the lid volume 500 when the lid 5 engages with the spacer 4. Preferably, such openings 55' may be opened and closed by means of a door 55".

According to one embodiment, the door 55" is made of a transparent material.

According to one embodiment, the storage and feeding assembly 1 comprises second coupling means 25 for coupling the lid 5 to the spacer 4. Preferably, the second coupling means 25 comprise a second releasable clamping ring 26 that couples adjacent end portions of the annular side wall 42 and the lid 5. Preferably, the second clamping ring 26 has a C-shaped cross section.

According to one embodiment, the second clamping ring 26 comprises second handling means 260 that are suitable for configuring the second clamping ring 26 from an open configuration to a closed configuration wherein it engages the adjacent end portions of the annular side wall 42 and of the lid 5 in order to fasten them in a stable manner to each other.

According to one embodiment, an upper end portion of the ring body 40 comprises an upper circumferential groove 24 for engagement with the second clamping ring 26. Preferably, the upper circumferential groove 24 is obtained only at the vertical supports 42b.

According to one embodiment, the second clamping ring 26 engages the annular side wall 42, preferably the vertical supports 42b and the lid 5, preferably the lid side wall 55.

According to one embodiment, the second clamping ring 26 is partially inserted into the upper circumferential groove 24 of the annular side wall 42.

According to one embodiment, the storage and feeding assembly 1 comprises at least one wire end sensor, which may be positioned, with respect to the wire supply direction, downstream and/or upstream of the wire handling device 3.

In particular, in the embodiment wherein the wire handling device 3 comprises the rectifier group and the wire pulling group, the at least one wire end sensor may be positioned between the rectifier group and the wire pulling group, or before and/or after each of the rectifier group and the wire pulling group.

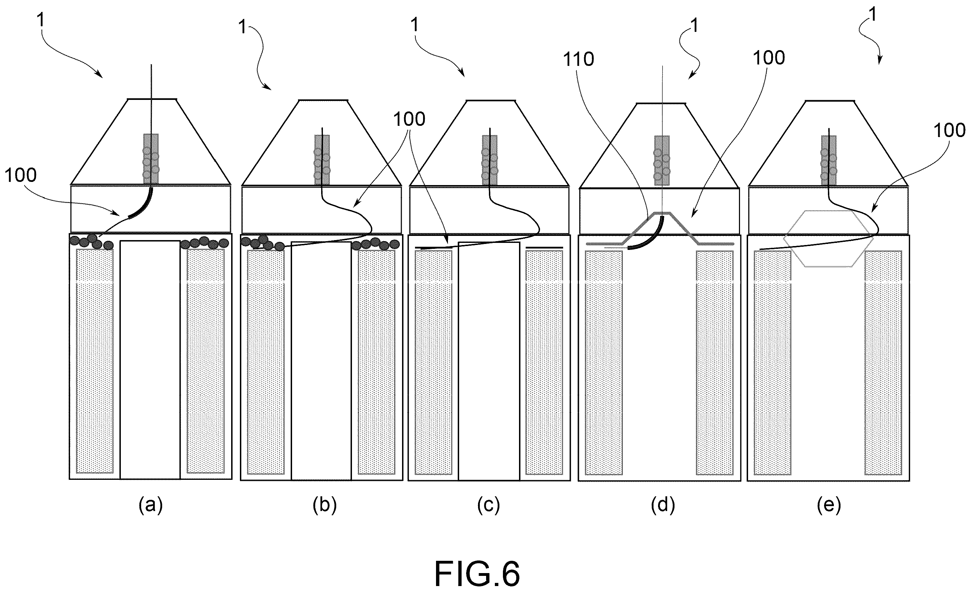

According to one embodiment (shown schematically in Fig. 6a, 6b, 6c, 6d and 6e), the storage and feeding assembly 1 comprises at least one wire unwinding accessory 100 positioned at least partially in the spacer housing 400.

For example, the accessory 100 is a wire guide device 110 (Fig. 6d), also known in the jargon as a "pay-off system," which allows the welding wire 10 to exit the drum 2 correctly. Such wire guide device generally has a conical shape and comprises a base that rests above the coils 10' of the wire and a rotating tubular element which guides the wire of the upper coil towards the drum outlet opening 2'.

Fig. 1 schematically shows the storage and feeding assembly typical of the prior art, wherein the lid is directly engaged with the drum, and the wire handling device is external to the lid. In particular, the welding wire originating from the upper coil, towards the wire handling device, forms an angle α with a transverse axis with respect to the assembly axis.

Fig. 3 shows, on the other hand, the storage and feeding assembly 1 of the present invention which comprises the spacer 4, placed between the drum 2 and the lid 5, and wherein the wire handling device 3 is inserted inside the lid 5. In particular, the welding wire 10 originating from the upper coil towards the wire handling device 3 forms an angle β with a transverse axis with respect to the assembly axis X-X. Such angle β is greater than the angle α, thus in the storage and feeding assembly of the present invention, the wire has a lower possibility of tangling and deformation than the wire of the storage and feeding assembly of the prior art.

In other words, using the spacer allows a greater angle of exit of the wire from the drum, thus decreasing the tangling and deformation of the wire.

The upper base of the spacer, to which the wire handling device is fastened, prevents debris, such as dust, from entering the drum thereby damaging the stored wire.

The use of the lid makes it possible to protect the wire handling device furthermore preventing the operator from being exposed to accidental injury, such as injury caused by electric shock due to unwanted voltage losses.

The openings obtained in the spacer and in the lid may be secured in such a way that only specialized personnel may have access thereto, thereby avoiding tampering and/or accidental injury by the operators.

A person skilled in the art may make changes within the scope of protection as defined by the following claims.

## Claims

1. A storage and feeding assembly (1) for a wire (10) to be fed to an apparatus, for example a welding wire to be fed to a welding torch, comprising:
- a drum (2) suitable for storing the wire (10) wound in coils (10'), the drum (2) extending about a drum axis (Y-Y) between a resting base (21) and an open upper end (23);
- a wire handling device (3) positioned between the drum (2) and the apparatus and suitable for extracting the wire (10) from the drum (2) to feed it to the apparatus;
- a lid (5) placed above the drum (2), wherein an outlet passage (5') for the wire (10) is obtained in a top of said lid (5);
wherein the storage and feeding assembly (1) comprises a spacer (4) suitable for being releasably positioned between the upper end (23) of the drum (2) and the lid (5), wherein said spacer (4) comprises a spacer body (40) defining a spacer housing (400) delimited by an annular side wall (42) so as to act as an extension for the drum (2),
wherein the spacer body (40) further comprises an upper base (44) connected to the annular side wall (42), and wherein the storage and feeding assembly (1) is **characterized in that** the wire handling device (3) is integrally fixed to the upper base (44) and wherein the lid (5) defines a lid volume (500) in which the handling device (3) extends substantially coaxially to the drum axis (Y-Y) .

2. Storage and feeding assembly (1) according to claim 1, further comprising at least one wire unwinding accessory (100) positioned at least partially in the spacer housing (400).

3. Storage and feeding assembly (1) according to any one of the preceding claims, comprising first coupling means (15) for releasably fastening the spacer (4) to the drum (2), wherein said first coupling means (15) comprise a first releasable clamping ring (16) which couples adjacent end portions of the drum (2) and the annular side wall (42).

4. Storage and feeding assembly (1) according to any one of the preceding claims, wherein at least one spacer opening (42') for accessing the spacer housing (400) is obtained in the annular side wall (42) of the spacer.

5. Storage and feeding assembly (1) according to any one of the preceding claims, comprising second coupling means (25) for releasably fastening the lid (5) to the spacer (4), wherein said second coupling means comprise a second releasable clamping ring (26) which couples adjacent end portions of the annular side wall (42) and the lid (5).

6. Storage and feeding assembly (1) according to claim 1, wherein the lid (5) comprises a lid side wall (55) in which at least one lid opening (55') for accessing the lid volume (500) is obtained.

7. Storage and feeding assembly (1) according to any one of the preceding claims, wherein the annular side wall (42) has an adjustable axial extension.

8. Storage and feeding assembly (1) according to claim 7, wherein the annular side wall (42) of the lid is a telescopic wall.

9. Storage and feeding assembly (1) according to any one of the preceding claims, wherein the wire handling device (3) comprises a rectifier group (50) and/or a wire pulling group (60).

10. Storage and feeding assembly (1) according to claim 9, wherein the rectifier group (50) comprises at least two roller rectifier units (52, 52a) placed in series with each other along the feeding direction of the wire (10).

11. 12. Storage and feeding assembly (1) according to claim 9 or 10, wherein the wire pulling group (60) comprises two opposite driving belts (12, 12') forming two respective straight belt segments (14) facing each other so as to receive therebetween and move the wire (10) exiting from the drum (2), or wherein the wire pulling group (60) comprises a plurality of motorized wire pulling rollers facing one another so as to receive therebetween and move the wire (10) exiting from the drum (2).

12. Storage and feeding assembly (1) according to claim 1, comprising the drum (2) in which the welding wire (10) wound in coils (10') is stored, forming a bundle (12) of wire;
wherein the ratio between a longitudinal dimension of the drum (2) and a longitudinal dimension of the bundle (12) is between 70% and 100%, preferably 85%.

## Patentansprüche

1. Vorrats- und Zuführanordnung (1) für einen Draht (10), der einem Gerät zugeführt werden soll, beispielsweise ein Schweißdraht, der einem Schweißbrenner zugeführt werden soll, umfassend:
- eine Trommel (2), die zur Lagerung des in Spulen (10') aufgewickelten Drahtes (10) geeignet ist, wobei sich die Trommel (2) um eine Trommelachse (Y-Y) zwischen einer Ruhebasis (21) und einem offenen oberen Ende (23) erstreckt;
- eine Drahthandhabungs-Vorrichtung (3), die zwischen der Trommel (2) und dem Gerät angeordnet ist und dazu geeignet ist, den Draht (10) aus der Trommel (2) zu entnehmen, um ihn dem Gerät zuzuführen;
- einen Deckel (5), der über der Trommel (2) angeordnet ist, wobei in einer Oberseite des Deckel (5) ein Auslasskanal (5') für den Draht (10) ausgebildet ist;
wobei die Vorrats- und Zuführanordnung (1) einen Abstandhalter (4) umfasst, der dazu geeignet ist, lösbar zwischen dem oberen Ende (23) der Trommel (2) und dem Deckel (5) positioniert zu werden, wobei der Abstandhalter (4) einen Abstandhalterkörper (40) umfasst, der ein durch eine ringförmige Seitenwand (42) begrenztes Abstandhaltergehäuse (400) definiert, um als Verlängerung für die Trommel (2) zu dienen,
wobei der Abstandhalterkörper (40) ferner eine mit der ringförmigen Seitenwand (42) verbundene obere Basis (44) umfasst, und wobei die Vorrats- und Zuführanordnung (1) **dadurch gekennzeichnet ist, dass** die Drahthandhabungs-Vorrichtung (3) fest mit der oberen Basis (44) verbunden ist und wobei der Deckel (5) ein Deckelvolumen (500) definiert, in dem sich die Handhabungs-Vorrichtung (3) im Wesentlichen koaxial zu der Trommelachse (Y-Y) erstreckt.

2. Vorrats- und Zuführanordnung (1) nach Anspruch 1, die ferner mindestens ein Drahtabwickelzubehör (100) umfasst, das zumindest teilweise in dem Abstandhaltergehäuse (400) positioniert ist.

3. Vorrats- und Zuführanordnung (1) nach einem der vorhergehenden Ansprüche, umfassend erste Kupplungsmittel (15) zum lösbaren Befestigen des Abstandhalters (4) an der Trommel (2), wobei die ersten Kupplungsmittel (15) einen ersten lösbaren Klemmring (16) umfassen, der benachbarte Endabschnitte der Trommel (2) und der ringförmigen Seitenwand (42) miteinander verbindet.

4. Vorrats- und Zuführanordnung (1) nach einem der vorhergehenden Ansprüche, wobei in der ringförmigen Seitenwand (42) des Abstandhalters mindestens eine Abstandhalteröffnung (42') für den Zugang zu dem Abstandhaltergehäuse (400) ausgebildet ist.

5. Vorrats- und Zuführanordnung (1) nach einem der vorhergehenden Ansprüche, umfassend zweite Kupplungsmittel (25) zum lösbaren Befestigen des Deckels (5) an dem Abstandhalter (4), wobei die zweiten Kupplungsmittel einen zweiten lösbaren Klemmring (26) umfassen, der benachbarte Endabschnitte der ringförmigen Seitenwand (42) und des Deckels (5) miteinander verbindet.

6. Vorrats- und Zuführanordnung (1) nach Anspruch 1, wobei der Deckel (5) eine Deckelseitenwand (55) umfasst, in der mindestens eine Deckelöffnung (55') für den Zugang zu dem Deckelvolumen (500) ausgebildet ist.

7. Vorrats- und Zuführanordnung (1) nach einem der vorhergehenden Ansprüche, wobei die ringförmige Seitenwand (42) eine einstellbare axiale Verlängerung aufweist.

8. Vorrats- und Zuführanordnung (1) nach Anspruch 7, wobei die ringförmige Seitenwand (42) des Deckels eine Teleskopwand ist.

9. Vorrats- und Zuführanordnung (1) nach einem der vorhergehenden Ansprüche, wobei die Drahthandhabungs-Vorrichtung (3) eine Richtgruppe (50) und/oder eine Drahtzuggruppe (60) umfasst.

10. Vorrats- und Zuführanordnung (1) nach Anspruch 9, wobei die Richtgruppe (50) mindestens zwei Rollenrichtwerke (52, 52a) umfasst, die entlang der Zuführrichtung des Drahtes (10) hintereinander angeordnet sind.

11. Vorrats- und Zuführanordnung (1) nach Anspruch 9 oder 10, wobei die Drahtzuggruppe (60) zwei gegenüberliegende Antriebsriemen (12, 12') umfasst, die jeweils zwei einander zugewandte gerade Riemenabschnitte (14) bilden, um den aus der Trommel (2) austretenden Draht (10) zwischen sich aufzunehmen und zu bewegen, oder wobei die Drahtzuggruppe (60) eine Vielzahl von motorisierten Drahtzugrollen umfasst, die einander zugewandt sind, um den aus der Trommel (2) austretenden Draht (10) zwischen sich aufzunehmen und zu bewegen.

12. Vorrats- und Zuführanordnung (1) nach Anspruch 1, umfassend die Trommel (2), in der der in Spulen (10') gewickelte Schweißdraht (10) gelagert ist und ein Drahtbündel (12) bildet; wobei das Verhältnis zwischen einer Längsabmessung der Trommel (2) und einer Längsabmessung des Bündels (12) zwischen 70 % und 100 %, vorzugsweise 85 %, liegt.

## Revendications

1. Ensemble de stockage et d'alimentation (1) pour un fil (10) à alimenter à un appareil, par exemple un fil de soudage à alimenter à une torche de soudage, comprenant :
- un tambour (2) approprié pour stocker le fil (10) enroulé en bobines (10'), le tambour (2) s'étendant autour d'un axe de tambour (Y-Y) entre une base de repos (21) et une extrémité supérieure ouverte (23) ;
- un dispositif de manipulation de fil (3) positionné entre le tambour (2) et l'appareil et adapté pour extraire le fil (10) du tambour (2) pour l'acheminer vers l'appareil ;
- un couvercle (5) placé au-dessus du tambour (2), dans lequel un passage de sortie (5') pour le fil (10) est obtenu dans une partie supérieure dudit couvercle (5) ;
dans lequel l'ensemble de stockage et d'alimentation (1) comprend un espaceur (4) apte à être positionnée de manière amovible entre l'extrémité supérieure (23) du tambour (2) et le couvercle (5), dans lequel ledit espaceur (4) comprend un corps d'espaceur (40) définissant un boîtier espaceur (400) délimité par une paroi latérale annulaire (42) de manière à servir de prolongement pour le tambour (2),
dans lequel le corps d'espaceur (40) comprend en outre une base supérieure (44) reliée à la paroi latérale annulaire (42), et dans lequel l'ensemble de stockage et d'alimentation (1) est **caractérisé en ce que** le dispositif de manipulation de fil (3) est fixé d'un seul tenant à la base supérieure (44) et dans lequel le couvercle (5) définit un volume de couvercle (500) dans lequel le dispositif de manipulation (3) s'étend sensiblement coaxialement à l'axe du tambour (Y-Y) .

2. Ensemble de stockage et d'alimentation (1) selon la revendication 1, comprenant en outre au moins un accessoire de déroulement de fil (100) positionné au moins partiellement dans le boîtier espaceur (400).

3. Ensemble de stockage et d'alimentation (1) selon l'une quelconque des revendications précédentes, comprenant des premiers moyens de couplage (15) pour fixer de manière libérable l'espaceur (4) au tambour (2), dans lequel lesdits premiers moyens de couplage (15) comprennent un premier anneau de serrage libérable (16) qui couple des parties d'extrémité adjacentes du tambour (2) et la paroi latérale annulaire (42).

4. Ensemble de stockage et d'alimentation (1) selon l'une quelconque des revendications précédentes, dans lequel au moins une ouverture d'espaceur (42') pour accéder au boîtier espaceur (400) est obtenue dans la paroi latérale annulaire (42) de l'espaceur.

5. Ensemble de stockage et d'alimentation (1) selon l'une quelconque des revendications précédentes, comprenant des deuxièmes moyens de couplage (25) pour fixer de manière libérable le couvercle (5) à l'espaceur (4), dans lequel lesdits deuxièmes moyens de couplage comprennent une deuxième bague de serrage libérable (26) qui couple des parties d'extrémité adjacentes de la paroi latérale annulaire (42) et du couvercle (5).

6. Ensemble de stockage et d'alimentation (1) selon la revendication 1, dans lequel le couvercle (5) comprend une paroi latérale de couvercle (55) dans laquelle au moins une ouverture de couvercle (55') pour accéder au volume de couvercle (500) est obtenue.

7. Ensemble de stockage et d'alimentation (1) selon l'une quelconque des revendications précédentes, dans lequel la paroi latérale annulaire (42) a une extension axiale réglable.

8. Ensemble de stockage et d'alimentation (1) selon la revendication 7, dans lequel la paroi latérale annulaire (42) du couvercle est une paroi télescopique.

9. Ensemble de stockage et d'alimentation (1) selon l'une quelconque des revendications précédentes, dans lequel le dispositif de manipulation de fil (3) comprend un groupe redresseur (50) et/ou un groupe de traction de fil (60).

10. Ensemble de stockage et d'alimentation (1) selon la revendication 9, dans lequel le groupe redresseur (50) comprend au moins deux unités de redresseur à rouleaux (52, 52a) placées en série l'une avec l'autre le long de la direction d'alimentation du fil (10).

11. Ensemble de stockage et d'alimentation (1) selon la revendication 9 ou 10, dans lequel le groupe de traction de fil (60) comprend deux courroies d'entraînement opposées (12, 12') formant deux segments de courroie rectilignes respectifs (14) se faisant face de manière à recevoir entre eux et à déplacer le fil (10) sortant du tambour (2), ou dans lequel le groupe de traction de fil (60) comprend une pluralité de rouleaux de traction de fil motorisés se faisant face de manière à recevoir entre eux et à déplacer le fil (10) sortant du tambour (2).

12. Ensemble de stockage et d'alimentation (1) selon la revendication 1, comprenant le tambour (2) dans lequel le fil de soudage (10) enroulé en bobines (10') est stocké, formant un faisceau (12) de fil ;
dans lequel le rapport entre une dimension longitudinale du tambour (2) et une dimension longitudinale du faisceau (12) est compris entre 70 % et 100 %, de préférence 85 %.
